# EUROPEAN PATENT SPECIFICATION

(11) **EP 4 519 568 B1**
(45) Date of publication and mention of the grant of the patent: **18.02.2026**
(21) Application number: 23725430.5
(22) Date of filing: 28.04.2023
(51) Int. Cl.: F04B 39/06, F04C 29/04

(54) **METHOD FOR CONTROLLING A COMPRESSOR INSTALLATION AND COMPRESSOR INSTALLATION**
VERFAHREN ZUR STEUERUNG EINER VERDICHTERANLAGE UND VERDICHTERANLAGE
PROCÉDÉ DE COMMANDE D'UNE INSTALLATION DE COMPRESSEUR ET INSTALLATION DE COMPRESSEUR

(30) Priority: 05.05.2022 BE 202205343
(43) Date of publication of application: 12.03.2025
(73) Proprietor: Atlas Copco Airpower, Naamloze Vennootschap, 2610 Wilrijk (BE)
(72) Inventor: CREPAIN, Thibault, 2610 Wilrijk (BE); HELLEMANS, Geert, 2610 Wilrijk (BE)
(74) Representative: Van Minnebruggen, Ewan Benito Agnes
(86) International application number: PCT/IB2023/054430
(87) International publication number: WO 2023/214270

(56) References cited:
- BE-A1- 1 027 363
- BE-A1- 1 027 507
- US-B2- 10 174 972

## Description

The present invention relates to a method for controlling a compressor installation.

More specifically, the invention is intended for controlling a compressor installation comprising at least two compressor elements arranged in series, wherein an outlet line is connected to the outlet of the last of the compressor elements arranged in series, wherein an intercooler is provided between the compressor elements, wherein the compressor installation is further provided with a dryer of the type using a drying agent or desiccant for drying the compressed gas originating from the compressor installation, wherein the dryer is provided with a drying section with an inlet connected to said outlet line and with an outlet for dried compressed gas and with a regeneration section with an inlet and an outlet for a regeneration gas, wherein a regeneration line is connected to the inlet of the regeneration section, which regeneration line is connected to the outlet line.

Such compressor installations, in which use is made of the hot compressed gas originating from the last compressor element for the regeneration of the drying agent, are already known.

It is necessary that the temperature of this gas is sufficiently high to ensure sufficient regeneration of the drying agent.

Depending on the environmental parameters and the operating condition of the compressor elements and the dryer, the temperature of the regeneration gas may be too low to achieve proper regeneration of the drying agent.

This has the disadvantage that the drying agent cannot be regenerated properly, such that not only the next drying cycle will be performed less optimally because drying has to be done with a drying agent that still contains moisture, but also because moisture can build up in the dryer.

To remedy this, in some cases an electric heater is provided in the regeneration line for heating the regeneration gas. When an unfavourable situation occurs, this electric heater is turned on to ensure that the temperature of the regeneration gas is increased.

This is accompanied by additional and undesired energy consumption.

Another way to remedy this is to reduce the cooling capacity of said intercooler in these circumstances.

Reducing the cooling capacity of the intercooler results in the temperature of the compressed gas at the outlet of the last compressor element being higher, resulting in a higher temperature of the regeneration gas.

In this way, it can be avoided that moisture builds up in the dryer and the drying agent will always be fully regenerated.

Reducing the cooling capacity of the intercooler can be done in several ways.

A first way is to provide a bypass line over the intercooler such that it can be controlled how much of the compressed gas passes through the intercooler.

A second way is to control the flow rate of the intercooler coolant, for example cooling water. By passing a lower flow of refrigerant through the intercooler, the cooling capacity will be reduced.

A disadvantage of this method is that, by cooling the compressed gas less or by cooling only part of the compressed gas, less moisture is removed.

As a result, the compressed gas at the outlet of the last compressor element, and thus also the regeneration gas, will contain more moisture, which in turn has a negative influence on the regeneration of the drying agent.

In some circumstances, this will actually make the regeneration worse, as opposed to the situation where the intercooler has not reduced its cooling capacity.

A compressor installation containing a dryer and a regeneration unit is known from document US 10 174 972 B2.

The present invention aims to provide a solution to at least one of said and other drawbacks.

The present invention aims at a compressor installation provided with a compressor device with at least two compressor elements arranged in series, wherein the inlet of the last compressor element of the at least two compressor elements arranged in series is connected via a pressure line to the outlet of the penultimate compressor element of the at least two compressor elements arranged in series, wherein an outlet line is connected to the outlet of the last compressor element of the at least two compressor elements arranged in series, wherein an intercooler is provided in said pressure line, wherein the compressor installation is further provided with a dryer of the type using a drying agent or desiccant for drying the compressed gas originating from the compressor device, wherein the dryer is provided with a drying section with an inlet connected to said outlet line and with an outlet for dried compressed gas, and a regeneration section with an inlet and an outlet for a regeneration gas, wherein a regeneration line is connected to the inlet of the regeneration section, which departs from a branch point of the outlet line, characterized in that the compressor installation is further provided with a heat exchanger with a primary section located in said pressure line downstream of said intercooler for heating the compressed gas, wherein the device is provided with means for controlling the heating of the compressed gas by the heat exchanger, wherein the compressor installation is further provided with a control unit for controlling said means.

An advantage is that by providing a heat exchanger for heating the compressed gas before it enters the last compressor element, it is still possible to cool the compressed gas first and remove condensate, without the compressed gas having too low a temperature as a result of this cooling after the last compressor element to properly regenerate the drying agent.

Moreover, the cooling will allow condensate to be removed, such that the compressed gas after the last compressor element contains less moisture compared to the existing technique, wherein the compressed gas is cooled less after the penultimate compressor element.

By providing a control unit which will control said means, the control can take place automatically on the basis of a number of predetermined parameters.

According to a preferred feature of the invention, the secondary section of the heat exchanger is located upstream of the intercooler.

The secondary section can here be located both downstream and downstream of the penultimate compressor element.

In a practical embodiment, the secondary section of the heat exchanger is included in a bypass line on said pressure line upstream of the intercooler and said means are constituted by a control valve which is arranged either in the bypass line, or in the part of the pressure line that is bypassed by the bypass line.

In another practical embodiment, the secondary section of the heat exchanger is included in said pressure line upstream of the intercooler, wherein the primary section of the heat exchanger is bypassed via a bypass line and said means are formed by a control valve arranged either in said bypass line or in the pressure line between the intercooler and the primary section of the heat exchanger.

An advantage of such a method is that the heat exchanger can be designed smaller, because the entire flow rate of compressed gas is used for heating the compressed gas after the intercooler and because only a part of the compressed gas flows through the primary section.

In the most preferred embodiment, a chiller is included downstream of the intercooler and upstream of the primary section of the heat exchanger for deep cooling of the compressed gas.

By adding the chiller, the compressed gas is cooled to below ambient temperature, such that additional condensate can be separated off.

As a result, the compressed gas after the last compressor element and thus the regeneration gas will contain less moisture, such that the regeneration process will run more efficiently.

The invention also relates to a method for controlling a compressor device with at least two compressor elements arranged in series, wherein the compressed gas is passed through a drying agent in a drying section for drying the compressed gas, and wherein the drying agent is subsequently regenerated in a regeneration section by means of a regeneration gas passed through a regeneration section, wherein the regeneration gas is branched off from the compressed gas downstream of the last of the compressor elements arranged in series, characterized in that the method comprises the following steps:
A) cooling the compressed gas leaving the penultimate of the at least two compressor elements arranged in series;
B) subsequently heating the compressed gas before the compressed gas enters the last of the two compressor elements arranged in series;
C) controlling the heating of the compressed gas.

The advantages of this method are similar to those of the compressor device.

By first cooling the gas, whereby condensate can be removed, and subsequently heating the compressed gas, it can be ensured that the regeneration gas has a sufficiently high temperature, without still having a high humidity.

Preferably, after cooling the compressed gas leaving the penultimate of the at least two compressor elements arranged in series, the method comprises the step of deep cooling the compressed gas.

This will allow to extract even more moisture from the compressed gas, such that ultimately the regeneration gas will contain less moisture, such that the regeneration will proceed better.

The invention also relates to a compressor installation provided with a compressor device with at least two compressor elements arranged in series, wherein the inlet of the last compressor element of the at least two compressor elements arranged in series is connected via a pressure line to the outlet of the penultimate compressor element of the at least two compressor elements arranged in series, wherein an outlet line is connected to the outlet of the last compressor element of the at least two compressor elements arranged in series, wherein an intercooler is provided in said outlet pipe, wherein the compressor installation is further provided with a dryer of the type using a drying agent or desiccant for drying the compressed gas originating from the compressor device, wherein the dryer is provided with a drying section with an inlet connected to said outlet line and with an outlet for dried compressed gas, and a regeneration section with an inlet and an outlet for a regeneration gas, wherein a regeneration line is connected to the inlet of the regeneration section, which departs from a branch point of the outlet line, characterized in that the compressor installation is further provided with a heat exchanger which is included in a bypass line over said intercooler, wherein the compressor installation is provided with means for controlling the heating of the compressed gas by the heat exchanger, wherein the compressor installation is further provided with a control unit for controlling said means.

An advantage is that by providing a heat exchanger for heating at least part of the compressed gas before it enters the last compressor element, it is still possible to cool the remaining part of the compressed gas first and to remove condensate, without the compressed gas having too low a temperature, as a result of this cooling after the last compressor element, to be able to properly regenerate the drying agent.

Moreover, the cooling will allow condensate to be removed, such that the compressed gas after the last compressor element contains less moisture compared to the existing technique, wherein the compressed gas is cooled less after the penultimate compressor element.

By providing a control unit which will control said means, the control can take place automatically on the basis of a number of predetermined parameters.

In order to better demonstrate the features of the invention, some preferred variants of a method according to the invention for controlling a compressor installation and compressor installation are described below, by way of example without any limiting character, with reference to the accompanying drawings, in which :
Figure 1 schematically represents a compressor device according to the invention;
Figures 2 and 3 represent an alternative embodiment of the compressor device from Figure **1****.**

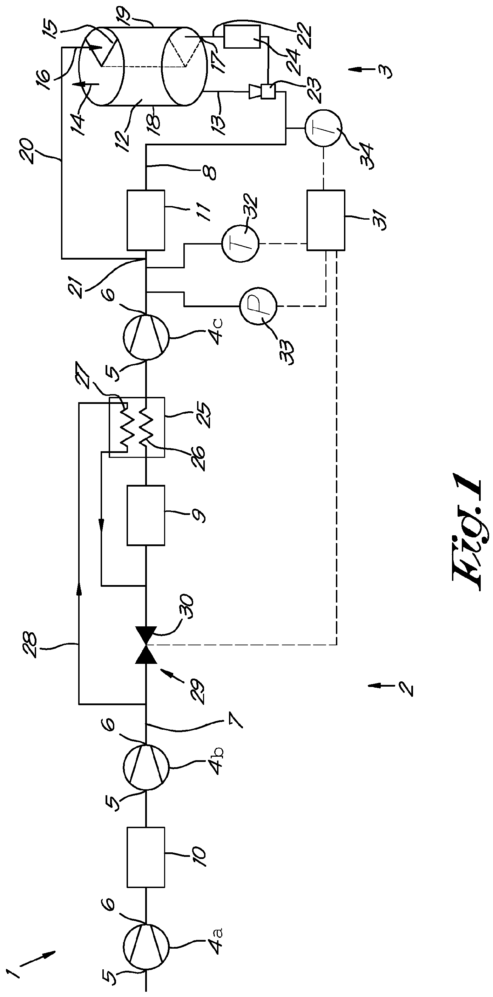

The compressor installation 1 shown schematically in Figure 1 comprises a compressor device 2 and a dryer 3.

In this case, the compressor device 1 comprises three compressor elements 4a, 4b, 4c arranged in series, each with an inlet 5 and an outlet 6, i.e. a first compressor element 4a, a penultimate compressor element 4b and a last compressor element 4c.

It is not excluded that said first compressor element 4a is absent or comprises several compressor elements 4a.

According to the invention, the inlet 5 of the last compressor element 4c is connected via a pressure line 7 to the outlet 6 of the penultimate compressor element 4b.

An outlet line 8 is connected to the outlet 6 of the last compressor element 4c.

In said pressure line 7, an intercooler 9 is provided for cooling the compressed gas.

In this case, an intercooler 10 is also provided between the first and the penultimate compressor element 4a, 4b.

In this case, but not necessary for the invention, an aftercooler 11 is provided.

The dryer 3 is of the type that uses a drying agent or desiccant for drying the compressed gas from the compressor device 2.

The dryer 3 is provided with a drying section 12 with an inlet 13 connected to said outlet line 8 and with an outlet 14 for dried compressed gas and a regeneration section 15 with an inlet 16 and an outlet 17 for a regeneration gas.

In this case, the dryer 3 is provided with a housing 18 within which the drying section 12 and the regeneration section 15 are located, wherein in the housing 18 a drum 19 containing the drying agent is arranged, which drum 19 is connected to drive means (not shown) in such a way that the drying agent can be moved successively through the drying section 12 and the regeneration section 15.

A regeneration line 20 is connected to the inlet 16 of the regeneration section 15, which departs from a branch point 21 of the outlet line 8. This branch point 21 is located upstream of said aftercooler 11.

In this case, a return line 22 is arranged on the outlet 17 of the regeneration section 15, which connects to the inlet 13 of the drying section 12. This connection is realized by means of a venturi ejector 23.

In this case, a cooler 24 is provided in the return line 22.

It will be appreciated that, instead of providing a return line 22, the regeneration gas can also be vented.

According to the invention, the compressor installation 1 is provided with a heat exchanger 25 for heating the compressed gas.

The primary section 26 of the heat exchanger is included in said pressure line 7, downstream of said intercooler 9.

In this embodiment, the secondary section 27 of the heat exchanger 25 is located upstream of the intercooler 9 and more specifically, the secondary section 27 of the heat exchanger 25 is included in a bypass line 28 on said pressure line 7 upstream of the intercooler 9. However, any location upstream of the intercooler 9 is possible.

In other words, the heat exchanger 25 will obtain its energy from the heat of compression, but this is not necessary for the invention.

According to the invention, the compressor installation 1 is provided with means 29 for controlling the heating of the compressed gas by the heat exchanger 25.

In this specific embodiment, these means 29 are formed by a control valve 30 which is arranged in the portion of the pressure line 7 which is bypassed by said bypass line 28.

The means 29 can also be arranged in the bypass line 28 itself.

Via these means 29, it is possible to regulate how much of the compressed gas flows through the secondary section 27 of the heat exchanger 25, or in other words: the capacity of the heat exchanger 25 can be regulated.

Said means 29 may also comprise a three-way valve arranged at a location where the bypass line 28 joins the pressure line 7.

In the embodiment of Figure 1, the bypass line 28 is arranged on said pressure line 7 upstream of the intercooler 9.

It is also possible that bypass line 28 is arranged over the intercooler 9, i.e. the compressed gas, after it has passed through the secondary section 27, is added to the delivery line 7 at a point downstream of the intercooler 9 instead of upstream of the intercooler 9, as is the case in Figure 1.

Furthermore, the compressor installation 1 is provided with a control unit 31 for controlling said means 29.

Finally, the compressor installation 1 is, in this case, provided with a number of sensors 32, 33, 34.

The term sensors 32, 33, 34 should be interpreted broadly in this context as general "measuring means', which can measure or determine certain parameters.

Thus, the compressor installation 1, in this case, comprises a sensor 32 and 33 for determining the temperature and pressure of the compressed gas at the outlet 6 of the last compressor element 4c.

Hence, this is the temperature and pressure of the regeneration gas.

In this case, the sensor 32 is provided at the outlet 6 of the last compressor element 4c, such that this sensor 32 can directly measure the temperature of the regeneration gas.

However, it cannot be ruled out that the sensor 32 is arranged at the inlet 5 of the last compressor element 4c, whereby the temperature of the regeneration gas can be calculated on the basis of the measurement of the sensor 32.

The compressor installation 1 also comprises a sensor 34 for measuring the temperature of the compressed gas at the inlet 13 of the drying section 12.

The control unit 31 is connected to said sensors 32, 33, 34 and is configured to determine, based on the signals from said sensors 32, 33, 34, how much moisture enters the dryer 3, i.e. the amount of moisture in the compressed gas entering the drying section 12 minus the amount of moisture of the compressed gas leaving the drying section 12 or thus the amount of moisture absorbed by the drying agent, and how much moisture exiting the dryer 3, i.e. the amount of moisture in the regeneration gas entering the regeneration section 15 minus the amount of moisture of the regeneration gas that enters the regeneration section 15, or hence the amount of moisture that is withdrawn from the drying agent, and to actuate, on this basis, the means 29. This is explained in more detail below.

In principle, the sensor 33 and the sensor 34 are optional, i.e. they are not necessary to control the means 29. However, by providing one or both of these sensors 33, 34, the control will be much more accurate.

The operation of the compressor installation 1 is very simple and as follows.

The compressor elements 4a, 4b, 4c will compress gas, for example ambient air.

After the first compressor element 4a, the compressed gas passes through the intercooler 10 to cool the gas and separate off the condensate.

After the penultimate compression stage 4b, a portion of the compressed gas is branched off and directed to the secondary section 27 of the heat exchanger 25 and then re-joins the compressed gas to further be directed to the intercooler 9.

The compressed gas is cooled in this intercooler 9, where condensate can be separated off.

After passing through the intercooler 9, the compressed gas ends up in the primary section 26 of the heat exchanger 25 and is reheated.

In this case, use is made of the heat of the compressed gas upstream of the respective intercooler 9 to reheat the compressed gas, but it is not excluded that the heat of the compressed gas is used upstream of the penultimate compressor element 4b or that another heat source is used.

Subsequently, the reheated compressed gas is passed through the last compressor element 4c.

After this, a portion of the compressed gas is branched off through the regeneration line 20 as regenerating gas and directed to the regeneration section 15 where the moisture will be extracted from the drying agent, while the rest of the compressed gas is passed through the aftercooler 11 to the inlet 13 of the drying section 12.

After passing through the regeneration section, the now moist regeneration gas is returned via the return line 22 to the inlet 13 of the drying section 12.

The compressed gas subsequently passes through the drying section 12, and the dried compressed gas leaves the compressor installation 1 through the outlet 14.

To control how much of the compressed gas is directed to the secondary section 27 of the heat exchanger 25 after the penultimate compressor element 4b, the control valve 30 is controlled by the control unit 31.

By directing more compressed gas to the heat exchanger 25, the compressed gas is heated more, such that the compressed gas after the last compression stage 4c and hence, also the regeneration gas will also have a higher temperature, with the result that the regeneration of the drying agent is more optimal or will proceed better. In other words, controlling the heating of the compressed gas and controlling the temperature of the regeneration gas can be done by controlling the control valve 30.

The control unit 31 will determine what temperature of the regeneration gas is required.

To this end, the control unit 31 will determine how much moisture enters the dryer 3 i.e. the amount of moisture in the compressed gas entering the drying section 12 minus the amount of moisture of the compressed gas leaving the drying section 12 or hence the amount of moisture absorbed by the drying agent, and how much moisture leaves the dryer 3, i.e. the amount of moisture in the regeneration gas leaving the regeneration section 15 minus the amount of moisture of the regeneration gas entering the regeneration section 15 or thus the amount of moisture withdrawn from the drying agent.

The control unit 31 will herein use the signals from said sensors 32, 33, 34. It is also possible that the control unit 31 determines this in a different way, for instance by making use of other sensors and/or sensors at other locations.

The control unit 31 will set the temperature of the regeneration gas such that the moisture entering the dryer 3 is equal to or within a certain margin equal to the moisture exiting the dryer 3.

If too little moisture leaves the dryer 3, the control unit 31 will increase the temperature of the regeneration gas by adjusting the control valve 30 appropriately. The regeneration of the saturated drying agent will proceed better, allowing more moisture to be extracted from the drying agent.

In this way, it can be ensured that little or no moisture remains in the dryer 3. This will ensure the proper functioning of the dryer.

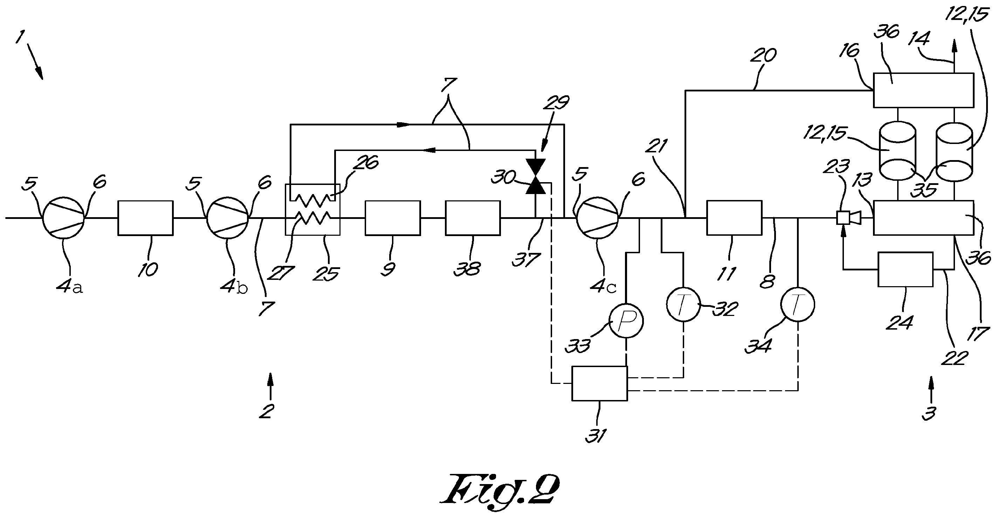

Figure 2 shows a variant according to Figure 1, wherein, in this case, firstly the dryer 3 comprises a number of vessels 35 filled with the drying agent, of which at least one vessel 35 constitutes the drying section 12 and at least one vessel 35 constitutes the regeneration section 15.

In this case, there are two vessels 35, one of which constitutes the drying section 12 and another the regeneration section 15.

The dryer 3 further comprises a valve system 36 which connects the inlet 13 and 16 respectively, and outlet 14 and 17 respectively of the drying section 12 and of the regeneration section 15 to said vessels 35, wherein said valve system 36 is such that at least one vessel 35 is always regenerated, while the other vessels 35 dry the compressed gas, wherein by controlling the valve system 36, the vessels 35 are each in turn successively regenerated.

Furthermore, in this case, the secondary section 27 is included in the pressure line 7 itself, upstream of the intercooler 9.

The primary section 26 of the heat exchanger 25 is, in this case, bypassed via a bypass line 37.

Said means 29 are formed by a control valve 30 which is arranged in the pressure line 7 between the intercooler 9 and the primary section 26 of the heat exchanger 25.

However, said means 29 can also be arranged in said bypass line 37.

Finally, the compressor installation 1 downstream of the intercooler 9 and upstream of the primary section 26 of the heat exchanger 25 is provided with a chiller 38 for deep cooling of the compressed gas.

The operation of the device 1 of Figure 2 is very similar to that of Figure 1.

In this case, the compressed gas will be passed, after the intercooler 9, through the chiller 38, where it is further cooled to below the ambient temperature.

As a result, even more moisture will condense and the compressed gas will be drier.

After the intercooler 9, a portion of the gas is passed through the heat exchanger 25 to be heated, using the heat of compression after the penultimate compressor element.

By controlling the control valve 30, it will be possible to control how much gas is heated and how much gas is directed directly to the last compressor element 4c via the bypass line 37, and thus also the temperature of the compressed gas entering the last compressor element 4c can be controlled and thus also the temperature of the regeneration gas.

The control unit 31 will also apply a control as described above in this embodiment.

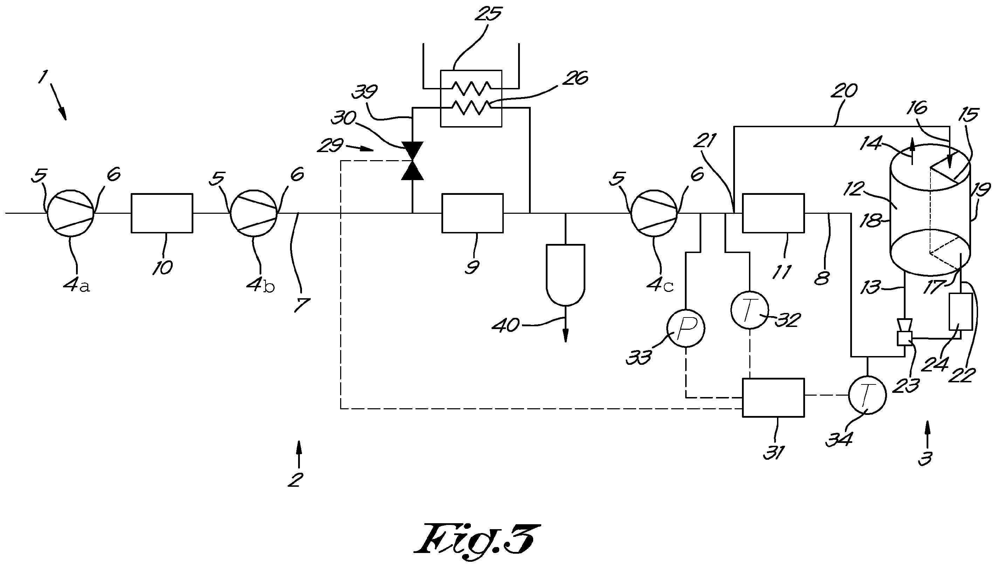

Figure 3 shows a second alternative embodiment of Figure 1, wherein, in this case, instead of a bypass line 28, a bypass line 39 is provided.

The heat exchanger 25 is provided in the bypass line 39, its primary section 26 being included in the bypass line 39.

Furthermore, means 29 are provided, in the form of a control valve 30, for controlling how much compressed gas passes through the intercooler 9.

The compressor installation 1 is also provided with means 40 for separating off condensate, said means 40 being located downstream of the intercooler 9.

These means 40 are, in this case, a condensate separator.

For the rest, the device is the same as that shown in Figure 1.

The operation of this embodiment is similar as described above, but, in this case, it will be controlled which part of the compressed gas is cooled and which part is heated.

A condensate separator 40 can also be provided in the embodiment of Figure 1 and Figure 2. In Figure 1, this condensate separator 40 is preferably positioned downstream of the intercooler 9 and upstream of the primary section 26. In Figure 2, preferably downstream of the chiller 38 and upstream of the primary section 36 and the bypass line 37.

The present invention is by no means limited to the embodiments described by way of example and shown in the figures, but such a method for controlling a compressor installation and compressor installation can be realized according to different variants without departing from the scope of the invention as defined by the appended claims .

## Claims

1. Compressor installation provided with a compressor device (2) with at least two compressor elements (4a, 4b, 4c) arranged in series, wherein the inlet (5) of the last compressor element (4c) of the at least two compressor elements arranged in series (4a, 4b, 4c) is connected via a pressure line (7) to the outlet (6) of the penultimate compressor element (4b) of the at least two compressor elements (4a, 4b, 4c) arranged in series, wherein an outlet line (8) is connected to the outlet (6) of the last compressor element (4c) of the at least two compressor elements (4a, 4b, 4c) arranged in series, wherein an intercooler (9) is provided in said pressure line (7), wherein the compressor installation (1) is further provided with a dryer (3) of the type using a drying agent or desiccant for drying the compressed gas originating from the compressor device (2), wherein the dryer (3) is provided with a drying section (12) with an inlet (13) connected to said outlet line (8) and with an outlet (14) for dried compressed gas, and a regeneration section (15) with an inlet (16) and an outlet (17) for a regeneration gas, wherein the inlet (16) of the regeneration section (15) is connected to a regeneration line (20) which departs from a branch point (21) of the outlet line (8), whereby the compressor installation (1) is further provided with a heat exchanger (25) with a primary section (26) located in said pressure line (7) downstream of said intercooler (9) for heating the compressed gas, wherein the compressor installation (1) is provided with means (29) for controlling the heating of the compressed gas by the heat exchanger (25), wherein the compressor installation (1) is further provided with a control unit (31) for controlling said means (29), wherein a secondary section (27) of the heat exchanger (25) is located upstream of the intercooler (9), **characterized in that** said secondary section (27) of the heat exchanger (25) is included in a bypass line (28) on said pressure line (7) upstream of the intercooler (9).

2. Compressor installation according to claim 1, **characterized in that** the secondary section (27) of the heat exchanger (25) is included in a bypass line (28) on said pressure line (7) arranged over the intercooler (9).

3. Compressor installation according to claim 1 or 2, **characterized in that** said means (29) are formed by:
- a control valve (30) arranged either in the bypass line (28) or in the section of the pressure line (7) bypassed by the bypass line (28); or by:
- a three-way valve arranged at a location where the bypass line (28) joins the pressure line (7).

4. Compressor installation according to claim 1, **characterized in that** the secondary section (27) of the heat exchanger (25) is included in said pressure line (7) upstream of the intercooler (9), wherein the primary section (26) of the heat exchanger (25) is bypassed via a bypass line (37), and **in that** said means (29) are formed by a control valve (30) arranged either in said bypass line (37) or in the pressure line (7) between the intercooler (9) and the primary section of the heat exchanger (26).

5. Compressor installation according to any one of the preceding claims, **characterized in that** a chiller (38) is included downstream of the intercooler (9) and upstream of the primary section (26) of the heat exchanger (25), for deep-cooling the compressed gas.

6. Compressor installation according to any one of the preceding claims, **characterized in that** the compressor installation (1) is provided with means (40) for separating off condensate, wherein said means (40) are located downstream of the intercooler (9).

7. Compressor installation according to any one of the preceding claims, **characterized in that** the dryer (3) is provided with a housing (18) within which the drying section (12) and the regeneration section (15) are located, wherein in the housing (18) a drum (19) is arranged containing the drying agent, which drum (19) is connected to drive means such that the drying agent can be moved successively through the drying section (12) and the regeneration section (15).

8. Compressor installation according to any one of the preceding claims 1 to 6, **characterized in that** the dryer (3) comprises a number of vessels (35) filled with the drying agent, of which at least one vessel (35) constitutes the drying section (12) and at least one vessel (35) constitutes the regeneration section (15), wherein the dryer (3) further comprises a valve system (36) connecting the inlet (13 and 16, respectively) and outlet (14 and 17, respectively) of the drying section (12) and of the regeneration section (15) to said vessels (35), wherein said valve system (36) is such that at least one vessel (35) is always regenerated, while the other vessels (35) dry the compressed gas, whereby by regulating the valve system (36) the vessels (35) are each in turn successively regenerated.

9. Compressor installation according to any one of the preceding claims, **characterized in that** a return line (22) is arranged on the outlet (17) of the regeneration section (15) which connects to the inlet (13) of the drying section (12).

10. Compressor installation according to any one of the preceding claims, **characterized in that** an aftercooler (24) is arranged in the outlet line (8) downstream of said branch point (21) of the regeneration line (21).

11. Compressor installation according to any one of the preceding claims, **characterized in that** the compressor installation (1) is further provided with sensors (32) to determine, to measure or to calculate the temperature of the compressed gas at the outlet (6) of the last compressor element (4c) of the at least two compressor elements (4a, 4b, 4c) arranged in series, wherein the control unit (31) is configured to determine, based on the signals from said sensors (32), how much moisture enters the dryer (3) and how much moisture leaves the dryer, and based thereon to control the means (29).

12. Compressor installation according to claim 11, **characterized in that** the compressor installation is additionally provided with a sensor (34) for measuring the temperature of the compressed gas at the inlet (13) of the drying section (12), and/or with a sensor (33) to determine the pressure of the compressed gas at the outlet (6) of the last compressor element (4c) of the at least two compressor elements (4a, 4b, 4c) arranged in series, wherein the control unit (31) is configured to determine, on the basis of the signals from said sensors (32, 33 and/or 34), how much moisture enters the dryer (3) and how much moisture leaves the dryer, and based thereon to control the means (29).

13. Method of controlling a compressor device (1) with at least two compressor elements (4a, 4b, 4c) arranged in series, wherein the compressed gas is passed through a drying agent in a drying section (12) for drying the compressed gas, and wherein the drying agent is subsequently regenerated in a regeneration section (15) by means of a regeneration gas passed through a regeneration section (15), wherein the regeneration gas is branched off from the compressed gas downstream of the last compressor element (4c) of the at least two compressor elements (4a, 4b, 4c) arranged in series, **characterized in that** the method comprises the following steps:
A) cooling the compressed gas leaving the penultimate compressor element (4b) of the at least two compressor elements (4a, 4b, 4c) arranged in series;
B) subsequently heating the compressed gas before the compressed gas enters the last compressor element (4c) of the two compressor elements (4a, 4b, 4c) arranged in series;
C) controlling the heating of the compressed gas.
wherein, for heating the compressed gas, use is made of the heat of the compressed gas upstream of the last compressor element (4c) of the at least two compressor elements (4a, 4b, 4c) arranged in series.

14. Method according to claim 13, **characterized in that** the step of controlling the heating of the compressed gas consists in determining how much moisture enters the dryer (3) and how much moisture leaves the dryer (3) and based thereon to control the temperature of the compressed gas.

15. Method according to any one of the preceding claims 13 to 14, **characterized in that** a heat exchanger (25) is used to heat the compressed gas.

16. Method according to any one of the preceding claims 13 to 15, **characterized in that** after cooling the compressed gas leaving the penultimate compressor element (4b) of the at least two compressor elements (4a, 4b, 4c) arranged in series, the method comprises the step of deep-cooling the compressed gas.

## Patentansprüche

1. Kompressoranlage, die mit einer Kompressorvorrichtung (2) mit mindestens zwei in Reihe angeordneten Kompressorelementen (4a, 4b, 4c) versehen ist, wobei der Einlass (5) des letzten Kompressorelements (4c) der mindestens zwei in Reihe angeordneten Kompressorelemente (4a, 4b, 4c) über eine Druckleitung (7) mit dem Auslass (6) des vorletzten Kompressorelements (4b) der mindestens zwei in Reihe angeordneten Kompressorelemente (4a, 4b, 4c) verbunden ist, wobei eine Auslassleitung (8) mit dem Auslass (6) des letzten Kompressorelements (4c) der mindestens zwei in Reihe angeordneten Kompressorelemente (4a, 4b, 4c) verbunden ist, wobei in der Druckleitung (7) ein Zwischenkühler (9) vorgesehen ist, wobei die Kompressoranlage (1) weiter mit einem Trockner (3) von dem Typ versehen ist, der ein Trocknungsmittel oder einen Trocknungsstoff zum Trocknen des aus der Kompressorvorrichtung (2) stammenden komprimierten Gases verwendet, wobei der Trockner (3) mit einem Trocknungsabschnitt (12) mit einem mit der Auslassleitung (8) verbundenen Einlass (13) und mit einem Auslass (14) für getrocknetes komprimiertes Gas sowie einem Regenerationsabschnitt (15) mit einem Einlass (16) und einem Auslass (17) für ein Regenerationsgas versehen ist, wobei der Einlass (16) des Regenerationsabschnitts (15) mit einer Regenerationsleitung (20) verbunden ist, die von einem Abzweigpunkt (21) der Auslassleitung (8) abzweigt, wobei die Kompressoranlage (1) weiter mit einem Wärmetauscher (25) mit einem Primärabschnitt (26) versehen ist, der in der Druckleitung (7) stromabwärts des Zwischenkühlers (9) angeordnet ist, um das komprimierte Gas zu erwärmen, wobei die Kompressoranlage (1) mit Mitteln (29) zum Steuern der Erwärmung des komprimierten Gases durch den Wärmetauscher (25) versehen ist, wobei die Kompressoranlage (1) weiter mit einer Steuereinheit (31) zum Steuern der Mittel (29) versehen ist, wobei ein Sekundärabschnitt (27) des Wärmetauschers (25) stromaufwärts des Zwischenkühlers (9) angeordnet ist, **dadurch gekennzeichnet, dass** der Sekundärabschnitt (27) des Wärmetauschers (25) in einer Bypassleitung (28) an der Druckleitung (7) stromaufwärts des Ladeluftkühlers (9) enthalten ist.

2. Kompressoranlage nach Anspruch 1, **dadurch gekennzeichnet, dass** der Sekundärabschnitt (27) des Wärmetauschers (25) in einer Bypassleitung (28) an der Druckleitung (7) enthalten ist, die über dem Zwischenkühler (9) angeordnet ist.

3. Kompressoranlage nach Anspruch 1 oder 2, **dadurch gekennzeichnet, dass** die Mittel (29) gebildet sind durch:
- ein Steuerventil (30), das entweder in der Bypassleitung (28) oder in dem Abschnitt der Druckleitung (7) angeordnet ist, der von der Bypassleitung (28) umgangen wird; oder durch:
- ein Dreiwegeventil, das an einer Stelle angeordnet ist, an der die Bypassleitung (28) in die Druckleitung (7) mündet.

4. Kompressoranlage nach Anspruch 1, **dadurch gekennzeichnet, dass** der Sekundärabschnitt (27) des Wärmetauschers (25) in der Druckleitung (7) stromaufwärts des Zwischenkühlers (9) enthalten ist, wobei der Primärabschnitt (26) des Wärmetauschers (25) über eine Bypassleitung (37) umgangen wird, und dass die Mittel (29) durch ein Steuerventil (30) gebildet sind, das entweder in der Bypassleitung (37) oder in der Druckleitung (7) zwischen dem Zwischenkühler (9) und dem Primärabschnitt des Wärmetauschers (26) angeordnet ist.

5. Kompressoranlage nach einem der vorstehenden Ansprüche, **dadurch gekennzeichnet, dass,** stromabwärts des Zwischenkühlers (9) und stromaufwärts des Primärabschnitts (26) des Wärmetauschers (25), ein Kühler (38) zum Tiefkühlen des komprimierten Gases enthalten ist.

6. Kompressoranlage nach einem der vorstehenden Ansprüche, **dadurch gekennzeichnet, dass** die Kompressoranlage (1) mit Mitteln (40) zum Abscheiden von Kondensat versehen ist, wobei die Mittel (40) stromabwärts des Zwischenkühlers (9) angeordnet sind.

7. Kompressoranlage nach einem der vorstehenden Ansprüche, **dadurch gekennzeichnet, dass** der Trockner (3) mit einem Gehäuse (18) versehen ist, in dem der Trocknungsabschnitt (12) und der Regenerationsabschnitt (15) angeordnet sind, wobei in dem Gehäuse (18) eine Trommel (19) angeordnet ist, die das Trocknungsmittel aufweist, wobei die Trommel (19) mit Antriebsmitteln verbunden ist, so dass das Trocknungsmittel nacheinander durch den Trocknungsabschnitt (12) und den Regenerationsabschnitt (15) bewegt werden kann.

8. Kompressoranlage nach einem der vorstehenden Ansprüche 1 bis 6, **dadurch gekennzeichnet, dass** der Trockner (3) eine Anzahl von mit dem Trocknungsmittel gefüllten Behältern (35) umfasst, von denen mindestens ein Behälter (35) den Trocknungsabschnitt (12) bildet und mindestens ein Behälter (35) den Regenerationsabschnitt (15) bildet, wobei der Trockner (3) weiter ein Ventilsystem (36) umfasst, das den Einlass (13 beziehungsweise 16) und den Auslass (14 beziehungsweise 17) des Trocknungsabschnitts (12) und des Regenerationsabschnitts (15) mit den Behältern (35) verbindet, wobei das Ventilsystem (36) so beschaffen ist, dass mindestens ein Behälter (35) immer regeneriert wird, während die anderen Behälter (35) das komprimierte Gas trocknen, wodurch durch Regeln des Ventilsystems (36) die Behälter (35) jeweils nacheinander regeneriert werden.

9. Kompressoranlage nach einem der vorstehenden Ansprüche, **dadurch gekennzeichnet, dass** an dem Auslass (17) des Regenerationsabschnitts (15) eine Rückführleitung (22) angeordnet ist, die mit dem Einlass (13) des Trocknungsabschnitts (12) verbunden ist.

10. Kompressoranlage nach einem der vorstehenden Ansprüche, **dadurch gekennzeichnet, dass** in der Auslassleitung (8) stromabwärts des Abzweigpunkts (21) der Regenerationsleitung (21) ein Nachkühler (24) angeordnet ist.

11. Kompressoranlage nach einem der vorstehenden Ansprüche, **dadurch gekennzeichnet, dass** die Kompressoranlage (1) weiter mit Sensoren (32) versehen ist, um die Temperatur des komprimierten Gases an dem Auslass (6) des letzten Kompressorelements (4c) der mindestens zwei in Reihe angeordneten Kompressorelemente (4a, 4b, 4c) zu bestimmen, zu messen oder zu berechnen, wobei die Steuereinheit (31) so konfiguriert ist, dass sie auf der Grundlage der Signale von den Sensoren (32) bestimmt, wie viel Feuchtigkeit in den Trockner (3) eintritt und wie viel Feuchtigkeit den Trockner verlässt, und auf dieser Grundlage die Mittel (29) steuert.

12. Kompressoranlage nach Anspruch 11, **dadurch gekennzeichnet, dass** die Kompressoranlage zusätzlich mit einem Sensor (34) zum Messen der Temperatur des komprimierten Gases an dem Einlass (13) des Trocknungsabschnitts (12) und/oder mit einem Sensor (33) zum Bestimmen des Drucks des komprimierten Gases an dem Auslass (6) des letzten Kompressorelements (4c) der mindestens zwei in Reihe angeordneten Kompressorelemente (4a, 4b, 4c) versehen ist, wobei die Steuereinheit (31) so konfiguriert ist, dass sie auf der Grundlage der Signale von den Sensoren (32, 33 und/oder 34) bestimmt, wie viel Feuchtigkeit in den Trockner (3) eintritt und wie viel Feuchtigkeit den Trockner verlässt, und auf dieser Grundlage die Mittel (29) steuert.

13. Verfahren zum Steuern einer Kompressorvorrichtung (1) mit mindestens zwei in Reihe angeordneten Kompressorelementen (4a, 4b, 4c), wobei das komprimierte Gas zum Trocknen des komprimierten Gases durch ein Trocknungsmittel in einem Trocknungsabschnitt (12) geleitet wird und wobei das Trocknungsmittel anschließend in einem Regenerationsabschnitt (15) mittels eines durch einen Regenerationsabschnitt (15) durchgeleiteten Regenerationsgases regeneriert wird, wobei das Regenerationsgas stromabwärts des letzten Kompressorelements (4c) der mindestens zwei in Reihe angeordneten Kompressorelemente (4a, 4b, 4c) von dem komprimierten Gas abgezweigt wird, **dadurch gekennzeichnet, dass** das Verfahren die folgenden Schritte umfasst:
A) Kühlen des komprimierten Gases, das das vorletzte Kompressorelement (4b) der mindestens zwei in Reihe angeordneten Kompressorelemente (4a, 4b, 4c) verlässt;
B) anschließendes Erwärmen des komprimierten Gases, bevor das komprimierte Gas in das letzte Kompressorelement (4c) der zwei in Reihe angeordneten Kompressorelemente (4a, 4b, 4c) eintritt;
C) Steuern der Erwärmung des komprimierten Gases.
wobei zum Erwärmen des komprimierten Gases die Wärme des komprimierten Gases stromaufwärts des letzten Kompressorelements (4c) der mindestens zwei in Reihe angeordneten Kompressorelemente (4a, 4b, 4c) genutzt wird.

14. Verfahren nach Anspruch 13, **dadurch gekennzeichnet, dass** der Schritt des Steuerns der Erwärmung des komprimierten Gases das Bestimmen, wie viel Feuchtigkeit in den Trockner (3) eintritt und wie viel Feuchtigkeit den Trockner (3) verlässt, und auf dieser Grundlage die Temperatur des komprimierten Gases zu steuern, aufweist.

15. Verfahren nach einem der vorstehenden Ansprüche 13 bis 14, **dadurch gekennzeichnet, dass** ein Wärmetauscher (25) zum Erwärmen des komprimierten Gases verwendet wird.

16. Verfahren nach einem der vorstehenden Ansprüche 13 bis 15, **dadurch gekennzeichnet, dass,** nach dem Kühlen des komprimierten Gases, das das vorletzte Kompressorelement (4b) der mindestens zwei in Reihe angeordneten Kompressorelemente (4a, 4b, 4c) verlässt, das Verfahren den Schritt des Tiefkühlens des komprimierten Gases umfasst.

## Revendications

1. Installation de compression qui est équipée d'un dispositif (2) faisant office de compresseur, qui comprend au moins deux éléments (4a, 4b,4c) faisant office de compresseurs qui sont montés en série ; dans laquelle l'entrée (5) du dernier élément (4c) faisant office de compresseur parmi lesdits au moins deux éléments faisant office de compresseurs qui sont montés en série (4a, 4b,4c) est reliée par l'intermédiaire d'une conduite sous pression (7) à la sortie (6) de l'avant-dernier élément (4b) faisant office de compresseur parmi lesdits au moins deux éléments faisant office de compresseurs (4a, 4b,4c) qui sont montés en série ; dans laquelle une conduite de sortie (8) est reliée à la sortie (6) du dernier élément (4c) faisant office de compresseur parmi lesdits au moins deux éléments faisant office de compresseurs (4a, 4b,4c) qui sont montés en série ; dans laquelle un refroidisseur intermédiaire (9) est prévu dans ladite conduite sous pression (7) ; dans laquelle l'installation de compression (1) est en outre équipée d'un sécheur (3) du type qui utilise un agent desséchant ou un dessiccateur qui est destiné à sécher le gaz comprimé qui provient du dispositif (2) faisant office de compresseur ; dans laquelle le sécheur (3) est équipé : d'un tronçon de séchage (12) qui comprend une entrée (13) qui est reliée à ladite conduite de sortie (8) et qui comprend une sortie (14) destinée au gaz comprimé qui a été séché ; et d'un tronçon de régénération (15) qui comprend une entrée (16) et une sortie (17) qui sont destinées à un gaz de régénération ; dans laquelle l'entrée (16) du tronçon de régénération (15) est reliée à une conduite de régénération (20) qui trouve son origine à un endroit de ramification (21) de la conduite de sortie (8) ; dans laquelle l'installation de compression (1) est en outre équipée d'un échangeur de chaleur (25) qui comprend un tronçon primaire (26) qui est situé dans ladite conduite sous pression (7) en aval dudit refroidisseur intermédiaire (9) pour le chauffage du gaz comprimé ; dans laquelle l'installation de compression (1) est équipée de moyens (29) qui destinés au réglage du chauffage du gaz comprimé par l'intermédiaire de l'échangeur de chaleur (25) ; dans laquelle l'installation de compression (1) est en outre équipée d'une unité de commande (31) qui est destinée à la commande desdits moyens (29) ; dans laquelle un tronçon secondaire (27) de l'échangeur de chaleur (25) est situé en amont du refroidisseur intermédiaire (9), **caractérisé en ce que** ledit tronçon secondaire (27) de l'échangeur de chaleur (25) est inclus dans une conduite de dérivation (28) sur ladite conduite sous pression (7) en amont du refroidisseur intermédiaire (9).

2. Installation de compression selon la revendication 1, **caractérisée en ce que** le tronçon secondaire (27) de l'échangeur de chaleur (25) est inclus dans une conduite de dérivation (28) sur ladite conduite sous pression (7) qui est disposée par-dessus le refroidisseur intermédiaire (9).

3. Installation de compression selon la revendication 1 ou 2, **caractérisée en ce que** lesdits moyens (29) sont réalisés :
par l'intermédiaire d'une vanne de réglage (30) qui est disposée, soit dans la conduite de dérivation (28), soit dans le tronçon de la conduite sous pression (7) qui fait l'objet d'une dérivation par l'intermédiaire de la conduite de dérivation (28) ; ou
par l'intermédiaire d'une vanne à trois voies qui est disposée à un endroit auquel la conduite de dérivation (28) rejoint la conduite sous pression (7).

4. Installation de compression selon la revendication 1, **caractérisée en ce que** le tronçon secondaire (27) de l'échangeur de chaleur (25) est inclus dans ladite conduite sous pression (7) en amont du refroidisseur intermédiaire (9) ; dans laquelle le tronçon primaire (26) de l'échangeur de chaleur (25) est soumis à une dérivation par l'intermédiaire d'une conduite de dérivation (37) ; et **en ce que** lesdits moyens (29) sont réalisés par l'intermédiaire d'une vanne de réglage (30) qui est disposée, soit dans ladite conduite de dérivation (37), soit dans la conduite sous pression (7) entre le refroidisseur intermédiaire (9) et le tronçon primaire de l'échangeur de chaleur (26).

5. Installation de compression selon l'une quelconque des revendications précédentes, **caractérisée en ce qu'**un appareil de réfrigération (38) est inclus en aval du refroidisseur intermédiaire (9) et en amont du tronçon primaire (26) de l'échangeur de chaleur (25), pour le refroidissement en profondeur du gaz qui a été comprimé.

6. Installation de compression selon l'une quelconque des revendications précédentes, **caractérisée en ce que** l'installation de compression (1) est équipée de moyens (40) qui destinés à éliminer le condensat par séparation ; dans laquelle lesdits moyens (40) sont situés en aval du refroidisseur intermédiaire (9).

7. Installation de compression selon l'une quelconque des revendications précédentes, **caractérisée en ce que** le sécheur (3) est équipé d'un boîtier (18) au sein duquel sont logés le tronçon de séchage (12) et le tronçon de régénération (15) ; dans laquelle un tambour (19), qui contient l'agent desséchant, est monté dans le boîtier (18) ; dans laquelle ledit tambour (19) est relié à des moyens d'entraînement d'une manière telle que l'agent desséchant peut être déplacé de manière successive à travers le tronçon de séchage (12) et le tronçon de régénération (15).

8. Installation de compression selon l'une quelconque des revendications précédentes 1 à 6, **caractérisée en ce que** le sécheur (3) comprend un certain nombre de réservoirs (35) qui sont remplis avec l'agent desséchant ; dans laquelle, parmi ces derniers, au moins un réservoir (35) constitue le tronçon de séchage (12) et au moins réservoir (35) constitue le tronçon de régénération (15) ; dans laquelle le sécheur (3) comprend en outre un système de vannes (36) qui relie l'entrée (13 et 16, respectivement) et la sortie (14 et 17, respectivement) du tronçon de séchage (12) et du tronçon de régénération (15)auxdits réservoirs (35) ; dans laquelle ledit système de vannes (36) est réalisé d'une manière telle qu'au moins un réservoir (35) est toujours régénéré, tandis que l'autre réservoir (35) sèche le gaz qui a été comprimé ; dans laquelle, par l'intermédiaire d'une régulation du système de vannes (36), les réservoirs (35) sont, chacun à leur, tour régénérés d'une manière successive.

9. Installation de compression selon l'une quelconque des revendications précédentes, **caractérisée en ce qu'**une conduite de retour (22) est prévue sur la sortie (17) du tronçon de régénération (15), qui est reliée à l'entrée (13) du tronçon de séchage (12).

10. Installation de compression selon l'une quelconque des revendications précédentes, **caractérisée en ce qu'**un refroidisseur final (24) est prévu dans la conduite de sortie (8) en aval dudit endroit de ramification (21) de la conduite de régénération (20).

11. Installation de compression selon l'une quelconque des revendications précédentes, **caractérisée en ce que** l'installation de compression (1) est en outre équipée de capteurs (32) qui sont destinés à déterminer, à mesurer ou à calculer la température du gaz qui a été comprimé à la sortie (6) du dernier élément (4c) faisant office de compresseur parmi lesdits au moins deux éléments faisant office de compresseurs (4a, 4b,4c) qui sont montés en série ; dans laquelle l'unité de commande (31) est configurée d'une manière telle qu'elle détermine, en se basant sur les signaux émis par lesdits capteurs (32), la quantité d'humidité qui pénètre dans le sécheur (3), ainsi que la quantité d'humidité qui quitte le sécheur, et en se basant sur ladite détermination, d'une manière telle qu'elle commande les moyens (29).

12. Installation de compression selon la revendication 11, **caractérisée en ce que** l'installation de compression est en plus équipée d'un capteur (34) qui est destiné à mesurer la température du gaz comprimé à l'entrée (13) du tronçon de séchage (12) ; et/ou d'un capteur (33) qui est destiné à déterminer la pression du gaz comprimé à la sortie (6) du dernier élément (4c) faisant office de compresseur parmi lesdits au moins deux éléments faisant office de compresseurs (4a, 4b,4c) qui sont montés en série ; dans laquelle l'unité de commande (31) est configurée d'une manière telle qu'elle détermine, sur la base des signaux qui sont émis par lesdits capteurs (32, 33 et/ou 34) la quantité d'humidité qui pénètre dans le sécheur (3), ainsi que la quantité d'humidité qui quitte le sécheur, et en se basant sur ladite détermination, d'une manière telle qu'elle commande les moyens (29).

13. Procédé destiné à la commande d'un dispositif (1) faisant office de compresseur qui comprend au moins deux éléments (4a, 4b,4c) faisant office de compresseurs qui sont montés en série ; dans lequel on fait passer le gaz qui a été comprimé à travers un agent desséchant dans un tronçon de séchage (12) pour le séchage du gaz qui a été comprimé ; et dans lequel l'agent desséchant est ensuite régénéré dans un tronçon de régénération (15) au moyen d'un gaz de régénération que l'on a fait passer à travers un tronçon de régénération (15) ; dans lequel le gaz de régénération est séparé par dérivation à partir du gaz comprimé en aval du dernier élément (4c) faisant office de compresseur parmi lesdits au moins deux éléments faisant office de compresseurs (4a, 4b,4c) qui sont montés en série, **caractérisé en ce que** le procédé comprend les étapes indiquées ci-après au cours desquelles :
(A) on refroidit le gaz qui a été comprimé qui quitte l'avant-dernier élément (4b) faisant office de compresseur parmi lesdits au moins deux éléments (4a, 4b,4c) faisant office de compresseurs qui sont montés en série ;
(B) on chauffe ensuite le gaz comprimé avant que le gaz qui a été comprimé ne pénètre dans le dernier élément (4c) faisant office de compresseur parmi lesdits au moins deux éléments (4a, 4b,4c) faisant office de compresseurs qui sont montés en série ;
(C) on règle le chauffage du gaz qui a été comprimé ;
dans lequel, pour le chauffage du gaz qui a été comprimé, il est fait usage de la chaleur du gaz comprimé en amont du derneir élément (4c) faisant office de compresseur parmi lesdits au moins deux éléments (4a, 4b,4c) faisant office de compresseurs qui sont montés en série.

14. Procédé selon la revendication 13, **caractérisé en ce que** l'étape au cours de laquelle on règle le chauffage du gaz qui a été comprimé consiste à déterminer la quantité d'humidité qui pénètre dans le sécheur (3), ainsi que la quantité d'humidité qui quitte le sécheur (3), et en se basant sur ladite détermination, on règle le chauffage du gaz qui a été comprimé.

15. Procédé selon l'une quelconque des revendications précédentes 13 à 14, **caractérisé en ce que** l'on utilise un échangeur de chaleur (25) pour le chauffage du gaz qui a été comprimé.

16. Procédé selon l'une quelconque des revendications précédentes 13 à 15, **caractérisé en ce que**, après le refroidissement du gaz comprimé qui quitte l'avant-dernier élément (4b) faisant office de compresseur parmi lesdits au moins deux éléments (4a, 4b,4c) faisant office de compresseurs qui sont montés en série, le procédé comprend l'étape au cours de laquelle on soumet le gaz comprimé à un refroidissement en profondeur.
